**Europäisches Patentamt**

**European Patent Office**

**Office européen des brevets**

(19)

(11) Veröffentlichungsnummer: **0 060 987**
**B1**

(12) **EUROPÄISCHE PATENTSCHRIFT**

(45) Veröffentlichungstag der Patentschrift:
11.09.85

(51) Int. Cl.⁴: **G 01 N 3/56**

(21) Anmeldenummer: **82100923.0**

(22) Anmeldetag: **09.02.82**

(54) Vorrichtung zur Durchführung von Einzelkornritzversuchen an Hartstoff- oder Schleifkörnern.

(30) Priorität: **21.03.81 DE 3111244**

(43) Veröffentlichungstag der Anmeldung:
**29.09.82 Patentblatt 82/39**

(45) Bekanntmachung des Hinweises auf die Patenterteilung:
**11.09.85 Patentblatt 85/37**

(84) Benannte Vertragsstaaten:
**AT BE CH DE FR GB IT LI LU NL SE**

(56) Entgegenhaltungen:
**US - A - 3 973 433**

**INDUSTRIAL DIAMOND REVIEW, Band 30, 1970,
Seiten 11-18, Londen GB, J.F. PRINS et al.: "An
apparatus for testing single diamond particles under
simulated working conditions"**
**WEAR, Band 19, 1972, Seiten 301-304, Lausanne, CH, D.
GRAHAM et al.: "An investigation into the mode of metal
removal in the grinding process"**

**Die Akte enthält technische Angaben, die nach dem
Eingang der Anmeldung eingereicht wurden und die
nicht in dieser Patentschrift enthalten sind.**

(73) Patentinhaber: **DYNAMIT NOBEL
AKTIENGESELLSCHAFT, Postfach 1209,
D-5210 Troisdorf, Bez. Köln (DE)**

(72) Erfinder: **Rehfeld, Gerhard, Dr., Bismarckstrasse 87,
D-5100 Aachen (DE)**
Erfinder: **Steffens, Klaus, Schlossparkstrasse 92,
D-5100 Aachen (DE)**

**Beschreibung**

Die Erfindung betrifft eine auf eine Flachschleifmaschine montierbare Vorrichtung zur Durchführung von Ritzversuchen an einzelnen Hartstoff- oder Schleifkörnern, die eine Kraftmeßeinrichtung aufweist.

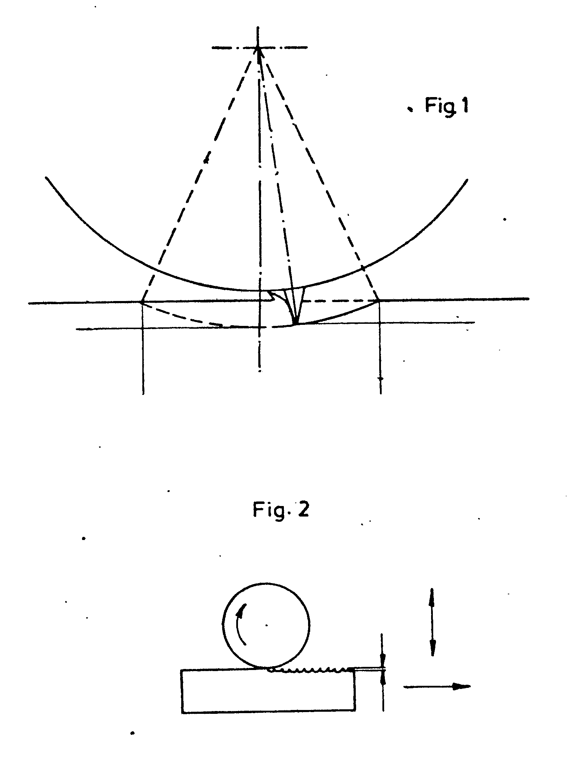

Das Verschleiß- und Schneidverhalten von Hartstoff- oder Schleifkörnern kann mit Hilfe von Einzelkornritzversuchen untersucht werden. Eine schematische Darstellung des Ritzvorganges mit einem am Umfang einer zylindrischen rotationssymmetrischen Scheibe in einer Befestigungsvorrichtung angebrachten zu untersuchenden Korn ist in Fig. 1 und 2 der Zeichnung aufgeführt.

Der Einzelkornritzversuch gestattet ein genaues Studium der Verschleißvorgänge und des Schneidverhaltens unterschiedlicher Kornsorten. Dabei sollte wegen des Realitätsbezugs die Kinematik des Schleifprozesses hinsichtlich Schnittgeschwindigkeit und Bahnform nachvollzogen werden. Die Aussagefähigkeit der Versuche ist außer von der Versuchsdurchführung und der Art der Auswertung und Bewertung der Versuchsergebnisse in erheblichem Maße abhängig von der benutzten Versuchsvorrichtung.

Die Durchführbarkeit der Ritzversuche ist an gewisse gerätetechnische Vorraussetzungen geknüpft. Insbesondere ist eine Ritzvorrichtung erforderlich, die den nachfolgend erläuterten Anforderungen genügt.

Einzelkornritzversuche werden in der Regel auf Flachschleifmaschinen durchgeführt. Da diese Flachschleifmaschinen aus Wirtschaftlichkeitsgründen im allgemeinen nur vorübergehend zum Ritzen umgerüstet werden, ansonsten aber für ihre eigentliche Aufgabe, das Schleifen, zur Verfügung stehen müssen, sollte das Umrüsten problemlos durchführbar sein. Dies ist dann der Fall, wenn die Ritzvorrichtung wie eine aufgeflanschte Schleifscheibe auf die Spindel der Flachschleifmaschine montiert werden kann.

Eine wesentliche Bewertungsgröße für die Einzelkornritzversuche ist die Ritzkraft. Sie sollte in zwei Komponenten gemessen werden können. Die sehr kurze Eingriffszeit des Korns erfordert ein hochfrequentes Kraftmeßsystem.

Versuche haben gezeigt, daß eine wirtschaftlich vertretbare Versuchsdurchführung nur realisiert werden kann, wenn die Werkstücke eine ausreichende Größe besitzen, und ausreichende Ritzlängen realisiert werden können. Eine Kraftmessung unterhalb des Werkstücks scheidet damit aus. Die Forderung nach hoher Eigenfrequenz der Kraftmeßeinrichtung läßt nur sehr geringe Zusatzmassen zu.

Besondere Bedeutung bei der Durchführung von Einzelkornritzversuchen kommt auch der Werkstückvorbereitung zu. Solche Versuche können nur dann zu brauchbaren Ergebnissen führen, wenn die Zustellung während des Ritzens vollkommen konstant gehalten wird. Der Betrag der Zustellung beim Ritzen liegt im allgemeinen nur bei einigen Mikrometern ($\mu$m). Für die Größe der Ritzkraft ist die größte Spannungsdicke verantwortlich, deren Betrag im allgemeinen um 1 bis 2 Zehnerpotenzen niedriger liegt als der Betrag der Zustellung. Da sich die Spannungsdicke zwangsläufig mit der Zustellung ändert, reagiert auch die Ritzkraft sehr empfindlich auf eine Änderung der Zustellung. Bereits bei einem Planlauffehler von 5 $\mu$m beim Ritzen eines Werkstoffs wird ein Kraftanstieg am Werkstückende beobachtet, was zeigt, daß der Kraftabfall in der Werkstückmitte nicht auf Verschleiß des Korns zurückzuführen ist, sondern eindeutig dem Planlauffehler zuzuschreiben ist. Damit wird deutlich, daß für verläßliche Ergebnisse von Einzelkornritzversuchen ein einwandfreier Planlauf des Werkstücks unabdingbare Voraussetzung ist. Beim Ritzen eines Werkstücks mit gutem Planlauf ist im Gegensatz zum Kraftverlauf beim Ritzen von Werkstücken mit Planlauffehler ein im wesentlichen konstanter Kraftverlauf zu beobachten.

Nach dem bisherigen gerätetechnischen Stand sind Einzelkornritzvorrichtungen in der Regel schleifscheibenähnliche Vorrichtungen, die das zu untersuchende und am Umfang in geeigneter Form befestigte Korn tragen. Die Versuche werden meistens auf Flachschleifmaschinen durchgeführt.

Bekannt sind Vorrichtungen, bei denen neben der Form der geritzen Riefe auch die Ritzkraft gemessen wird und bei denen sich die Kraftmeßeinrichtungen unterhalb des Werkstücks befinden. Die sehr kurze Anstiegszeit der Kraftsignale (etwa 50 $\mu$s) macht im allgemeinen den Einsatz von Piezoquarzen erforderlich. Allerdings kann aus den erörterten Gründen auch mit diesen an sich sehr hochfrequenten Dynamometern eine ausreichende Eigenfrequenz nur erreicht werden, wenn die sich auf dem Quarz befindende Zusatzmasse von Werkstück und Halterung sehr gering ist. Aus diesem Grunde können bei Geräten mit Kraftmessung unterhalb des Werkstücks nur sehr kleine Werkstücke geritzt werden. Die Versuche sind langwierig, da häufiger Werkstückwechsel nötig ist.

Ritzversuche mit Werkstücken beliebiger Größe können bei Verwendung einer Kraftmessung nur dann hinreichend aussagefähige Ergebnisse liefern, wenn sich das Kraftmeßelement mit dem sehr leichten Schleifkorn am Scheibenumfang der rotierenden Ritzscheibe befindet. Die in dieser Hinsicht fortschrittlichste Apparatur wurde von C. H. Shen, »Single grit grinding tests« (unveröffentlichter Bericht der General Motors Manufacturing Development) beschrieben. Die von Shen beschriebene Ritzvorrichtung besteht aus einer Aluminiumscheibe und ist mit einer Piezokraftmeßeinrichtung ausgestattet. Die Prüfkörner werden festgeklemmt oder mit Kunststoffkleber befestigt. Anhand der Versuchsergebnisse von Shen läßt sich eindeutig feststellen, daß die erforderliche Eigenfrequenz der Kraftmeßeinrichtung nicht in allen Fällen erreicht wurde. Außerdem ist eine ausreichende Werkstückvorbereitung zur Gewährleistung einer hochkonstanten Zustellung mit dieser Vorrichtung nicht möglich.

Beim Stand der Technik, von dem die Erfindung ausgeht (Wear 19 (1972), s. 301—314), wird das Werkstück mit der Schleifscheibe oder der Bandschleifeinrichtung durch Schruppen, Schlichten und Polieren plangeschliffen. In Anschluß daran mußte entweder die Schleifscheibe bzw. Stützscheibe gegen die Ritzvorrichtung ausgetauscht werden oder Werkstückvorbereitung und Ritzen mußten auf getrennten Maschinen durchgeführt werden. Im ersten Fall ergibt sich der Nachteil einer unwirtschaftlichen und zeitaufwendigen Versuchsdurchführung, wohingegen sich im zweiten Fall die Schwierigkeiten aus dem Planlauffehler der Maschine und beim Spannen des Werkstücks ergeben können.

In der genannten Literaturstelle beschreiben D. Graham und R. M. Baul, daß die Oberflächenbehandlung vor Beginn der jeweiligen Versuche an den auf dem Maschinentisch eingespannten Werkstücken in situ vorgenommen werden können. Diese als in-situ-Verfahren bezeichnete Arbeitsweise bedeutet, daß Werkstückvorbereitung und Ritzen in einer Aufspannung des Werkstücks vorgenommen werden, wobei jedoch Ritzscheibe und Schleifscheibe häufig gewechselt werden müssen. So könnte in einer Aufspannung das Werkstück auch mit einer Schleifscheibe vorgeschliffen und dann geritzt werden. In diesem Fall müßte die Schleifscheibe allerdings von der Spindel abmontiert und anschließend die Ritzscheibe auf die Spindel montiert werden, was einen erheblichen Zeitaufwand bedeutet. Unter Umständen müßte die Schleifscheibe mehrmals vor dem Ritzen gewechselt werden, da die geforderte extrem gute Oberfläche des zu ritzenden Werkstücks nicht mit einer einzigen Schleifmaschine erreicht werden kann.

Demgemäß besteht die der Erfindung zugrunde liegende Aufgabe darin, eine Vorrichtung aufzuzeigen, bei der Werkstückvorbereitung und Ritzen auf einer einzigen Maschine ohne Umrüsten ausgeführt werden können.

Gemäß der Erfindung wird diese Aufgabe bei einer Vorrichtung der eingangs genannten Art mit den im kennzeichnenden Teil des Anspruchs 1 angegebenen Merkmalen gelöst.

Eine weitere Ausgestaltung der Erfindung wird in Anspruch 2 angegeben.

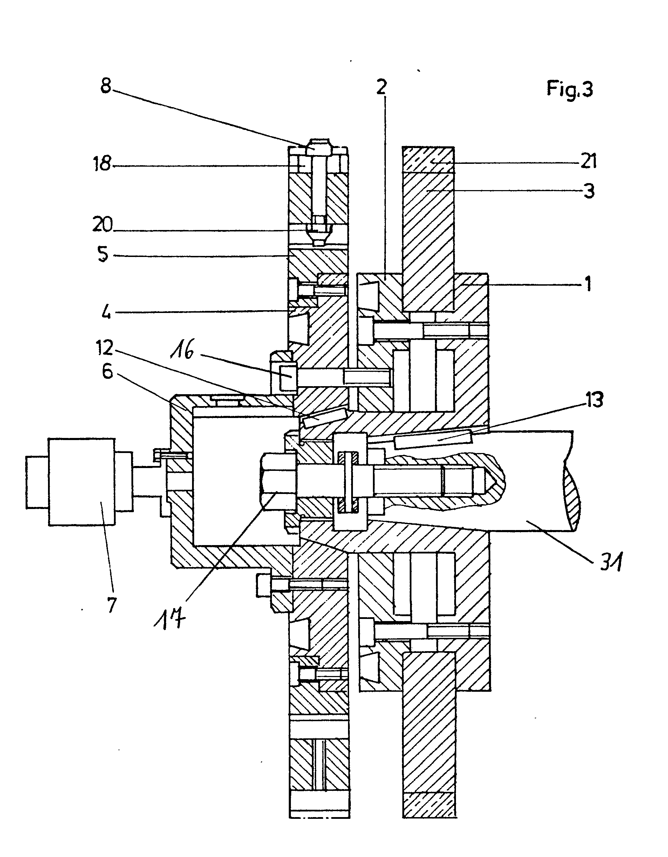

Die erfindungsgemäß realisierten Vorteile sind insbesondere die Zeitersparnis, die Minimierung des Maschinenplanlauffehlers, die extreme Konstanthaltung der Zustellung und die schnelle und wirtschaftliche Werkstückvorbereitung. Dadurch gelingt es, die Spannungsdicke beim Ritzen 1. sehr klein und 2. extrem konstant zu halten. Die Konstruktion der erfindungsgemäßen Vorrichtung wird anhand von Fig. 3 der Zeichnung wie folgt näher erläutert:

Teil 1 stellt den Grundflansch dar, der in seinen Maßen einem Schleifscheibenflansch entspricht und die Montage der Vorrichtung auf die Spindel einer Flachschleifmaschine mittels Paßfedernut 13 gestattet. Mit dem Gegenflansch 2 kann die Bandstützscheibe 3 festgespannt werden. Die Bandstützscheibe ist mit einem Gummibelag 21 mit einer Shorehärte von 95 ausgerüstet. Es kann damit vom Schruppen bis Polieren jede Feinbearbeitungsstufe durch Bandwechsel ausgeführt werden. Grundflansch 1, Bandstützscheibe 3, Gegenflansch 2, Gummibelag 21 und Zylinderschraube 17 stellen für sich eine lauffähige Einheit dar. Die Schwalbenschwanznut im Gegenflansch 2 gestattet das Wuchten der Vorrichtung. Die gesamte Vorrichtung besitzt zwei Wuchtnuten; auf diese Weise können dynamische Unwuchten vermieden werden, was bei einem Scheibensatz wesentlich ist.

Der Grundflansch 1 besitzt an seiner Vorderseite einen Konus mit Paßfedernut 12. Auf diesen Konus wird der Innenflansch 4 der Ritzscheibe gesetzt und mit den Schrauben 16 am Gegenflansch festgezogen. Wie die anderen Flansche, so ist auch der Innenflansch 4 aus Stahl und verfügt über eine Schwalbenschwanznut zum Wuchten. Die Ritzscheibe 5 selbst besteht aus Aluminium und befindet sich auf dem Innenflansch. An den Innenflansch wird auch die Übertragungseinheit, bestehend aus dem Gehäuse 6, welches einen oder mehrere Ladungsverstärker enthalten kann, und dem Drehübertrager 7, angeschraubt. Die Ritzscheibe besitzt zwei Segmente, die vom Grundkörper abgeschraubt werden können. Auf diese Weise können verschiedene Kraftmeßsysteme und Kornhalter montiert werden, ohne daß die in der Regel kalibrierte und vorgespannte Kraftmeßeinrichtung auseinandergebaut werden muß.

Die Ritzkraft wird in bis zu drei Komponenten mittels eines Piezoquarzes gemessen. Eine Dehnschraube 8 aus Titan spannt mit Hilfe der Mutter 20 den Quarz auf die erforderliche Vorspannung vor. Der Kopf der Dehnschraube besitzt eine kegelige Vertiefung und ein Innengewinde, in das eine Klemmplatte eingeschraubt werden kann. Der Kornhalter besteht aus einer Spezialnickelbasislegierung, mit der Hartstoff- oder Schleifkörner mittels Glaslot verlötet werden können. Sein konusförmiger Fuß sitzt in der kegeligen Vertiefung der Dehnschraube und wird mit der Klemmplatte festgezogen. Auf diese Weise kann das Korn beliebig positioniert werden und ist ausreichend fest mit der Dehnschraube verbunden. Durch die Verwendung von Titan und eine sorgfältige konstruktive Gestaltung der Dehnschraube und der Spannvorrichtung wird die erforderliche Eigenfrequenz der Kraftmeßeinrichtung erreicht. Zu der vorliegenden Vorrichtung gehört außerdem ein Bandspannarm mit Umlenkrolle (in Fig. 3 der Zeichnung nicht gezeigt). Als Kraftsignalübertrager sind z. B. Quecksilberdrehübertrager oder telemetrische Meßsysteme geeignet. In Fig. 3 der Zeichnung ist ein Drehübertrager 7 gezeigt.

Die praktischen Versuche mit der erfindungsgemäßen Vorrichtung werden so durchgeführt, daß das Versuchskorn an dem Umfang der Ritzscheibe befestigt und positioniert wird. Die Ladungssignale der Normal- und Tangentialkräfte werden von der Piezokraftmeßeinrichtung über den Drehübertrager zu zusätzlichen Ladungsverstärkern geführt und durch Speicheroszillographen aufgezeichnet, wobei das eine Kraftsignal den Normalkraftverlauf und das andere den Tangentialkraftverlauf anzeigt. Die Einstellung der Zustellung von 40 μm wird erreicht, indem das Korn in der Werkstückmitte »angefunkt« wird, ohne daß der Maschinentisch bewegt wird. Das Anfunken signalisiert dem Auge des Beobachters den ersten Kontakt des Korns mit dem Werkstück und ist auch durch die am Speicheroszillographen angezeigte, geringe Kraft registrierbar. Dann wird die Stellung des Maschinentisches, auf dem sich das plangeschliffene Werkstück befindet, so verändert, daß der Ritzvorgang am Werkstückanfang ansetzt.

Während sich die Ritzscheibe beim Ritzvorgang im Uhrzeigersinn dreht, übt der Tisch einen Arbeitshub im Gegenlauf oder Gleichlauf aus. Die Zustellung bleibt dabei konstant. Auf diese Weise entsteht eine »Ritzspur« auf der Werkstückoberfläche.

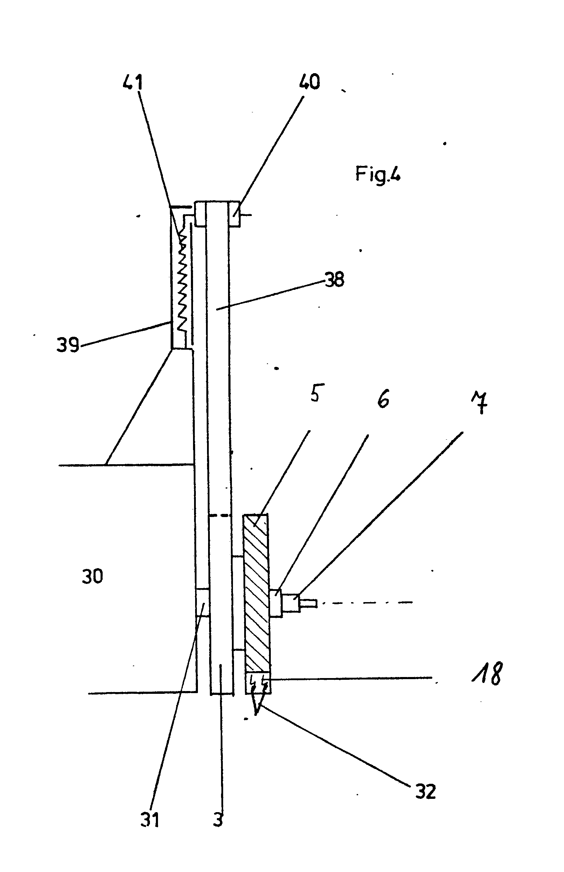

Es werden maximal vier Ritzspuren in gleichmäßigen Abständen erzeugt, wenn das Korn bis dahin nicht verschlissen ist. Dann wird es gewechselt und zur Auswertung eingeordnet. Fig. 4 ist eine schematische Darstellung der erfindungsgemäßen Ritzvorrichtung. In dieser Darstellung sind folgende Elemente der erfindungsgemäßen Vorrichtung gezeigt:

Spindelkasten 30, Schleifspindel 31, Schleifkorn 32, Kraftaufnehmer 18, Drehübertrager 7, Gehäuse 6, Ritzscheibe 5, Bandstützscheibe 3, Schleif-, Polierband 38, Bandspannarm 39, Umlenkrolle 40 und Druckfeder 41.

## Patentansprüche

1. Auf eine Flachschleifmaschine montierbare Vorrichtung zur Durchführung von Ritzversuchen an einzelnen Hartstoff- oder Schleifkörnern, die eine Kraftmeßeinrichtung aufweist, gekennzeichnet durch eine Bandschleifvorrichtung und eine Ritzvorrichtung, die gemeinsam auf der Spindel der Flachschleifmaschine montierbar sind, wobei die Bandschleifvorrichtung aus einer mittels eines Grundflansches (1) und eines Gegenflansches (2) aufgespannten Bandstützscheibe (3) und einem auf den Spindelkasten montierbaren Bandspannarm besteht und die Ritzvorrichtung aus einer auf den Grundflansch (1) montierbaren Ritzscheibe (5) mit einem an deren Umfang befestigten Einzelkorn und der zwischen Einzelkorn und Ritzscheibe befindlichen Kraftmeßeinrichtung besteht.

2. Vorrichtung nach Anspruch 1, dadurch gekennzeichnet, daß die Kraftmeßeinrichtung aus einem Kornhalter, einem Piezoquarz (18), einer Titandehnschraube (8) mit Schnellspannvorrichtung und einer an der Nabe der Ritzvorrichtung angebrachten Übertragungseinheit (6, 7) zur Übertragung der gemessenen Kräfte besteht.

## Claims

1. Apparatus for carrying out scratching experiments on single particles made of hard material or abrasive grains, which apparatus is mountable on a surface grinding machine and comprises a force measuring device, characterized by a belt grinding device and a scratching device which are together mountable on the spindle of the surface grinding machine, with the belt grinding device consisting of a belt supporting disc (3) clamped by means of a base flange (1) and a counter flange (2) and a belt tensioning arm mountable on the spindle box and the scratching device consisting of a scratching disc (5) mountable on the base flange (1) with a single grain fixed to its circumference and the force measuring device located between single grain and scratching disc.

2. Apparatus for carrying out scratching experiments on single particles according to claim 1, characterized in that the force measuring device consists of a grain holder, a piezo electric crystal (18), a titanium necked-down bolt (8) with quick acting clamping device and a transmission unit (6, 7) for transmission of the measured forces installed at the hub of the scratching device.

## Revendications

1. Dispositif pour réaliser des essais de rayage avec des grains individuels de matière dure ou d'abrasif, qui peut être monté sur une machine à rectifier les surfaces planes et qui présente un dispositif dynamométrique, caractérisé par un dispositif d'abrasion à bande abrasive et un dispositif de rayage, qui peuvent être montés ensemble sur la broche de la machine à rectifier les surfaces planes, le dispositif d'abrasion à bande abrasive étant constitué d'un disque de support de bande (3) fixé au moyen d'un flasque de base (1) et d'un contre-flasque (2), et d'un bras tendeur de bande pouvant être monté sur la poupée, et le dispositif de rayage étant constitué d'un disque de rayage (5) pouvant être monté sur le flasque de base (1) et portant un grain fixé à sa périphérie, et du dispositif dynamométrique, qui se trouve entre le grain et le disque de rayage.

2. Dispositif selon la revendication 1, caractérisé en ce que le dispositif dynamométrique est constitué d'un porte-grain, d'un quartz piézoélectrique (18), d'une vis extensible en titane (8) avec dispositif de serrage rapide et d'un bloc de transmission (6, 7) monté sur le moyeu du dispositif de rayage et destiné à transmettre les forces mesurées.

Fig. 1

Fig. 2

Fig.3

Fig.4